# EUROPÄISCHE PATENTANMELDUNG

(11) **EP 1 596 454 A2**
(43) Veröffentlichungstag der Anmeldung: **16.11.2005**
(21) Anmeldenummer: 05009868.0
(22) Anmeldetag: 06.05.2005
(51) Int. Cl.: H01M 8/02

(54) **Kontaktelement für einen Brennstoffzellenstapel**

(30) Priorität: 12.05.2004 DE 102004023461
(71) Anmelder: Webasto AG, 82131 Stockdorf (DE)
(72) Erfinder: Reinert, Andreas, 17033 Neubrandenburg (DE)

(57) **Zusammenfassung**

Die Erfindung ein Kontaktelement (7) für einen Brennstoffzellenstapel zur Verbindung von Elektroden (3,4) zweier benachbarter Brennstoffzellen. Das Kontaktelement ist dadurch ausgezeichnet, dass es mindestens einen mit einem Gas gefüllten, abgeschlossenen Hohlraum aufweist. Der Gaseinschluss verleit dem Kontaktelement (7) auch bei hohen Temperaturen dauerhaft Elastizität, wodurch eine sichere Kontaktierung der Elektroden (3,4) gewährleistet ist. Weiterhin betrifft die Erfindung einen Brannstoffzellenstapel, bei dem das Kontaktelement (7) verwendet wird.

## Beschreibung

Die Erfindung betrifft ein Kontaktelement für einen Brennstoffzellenstapel gemäß dem Oberbegriff von Patentanspruch 1 sowie einen Brennstoffzellenstapel gemäß den Oberbegriffen der Ansprüche 11 und 14.

Brennstoffzellen weisen einen ionenleitenden Elektrolyten auf, der beidseitig über zwei Elektroden, Anode und Kathode, kontaktiert wird. Der Anode wird ein reduzierender, meist wasserstoffhaltiger Brennstoff zugeführt und der Kathode ein Oxidationsmittel, z.B. Luft. Zusammenfassend werden Brennstoff und Oxidationsmittel im Folgenden Betriebsmittel genannt. Die bei der Oxidation des im Brennstoff enthaltenen Wasserstoffs an einer Elektrode freigesetzten Elektronen werden über einen externen Laststromkreis zu der anderen Elektrode geführt. Die frei werdende chemische Energie steht so im Laststromkreis mit hohem Wirkungsgrad direkt als elektrische Energie zur Verfügung.

Zur Erzielung höherer Leistung werden mehrere planare Brennstoffzellen häufig in Form eines Brennstoffzellenstapels aufeinander gestapelt und elektrisch in Reihe geschaltet. Zu diesem Zweck werden zwischen jeweils zwei Zellen so genannte Bipolarplatten angeordnet. Zum einen verbinden die Bipolarplatten jeweils die Anode einer Zelle mit der Kathode der nächsten Zelle, wobei eine möglichst gute Kontaktierung verteilt über die gesamte Elektrodenfläche erforderlich ist. Zum anderen dienen die Bipolarplatten der Zuführung und Verteilung der Betriebsmittel über die Elektrodenflächen. Zu diesem Zweck sind üblicherweise auf jeder Seite der Bipolarplatte Kanäle ausgebildet, durch die die Betriebsmittel voneinander getrennt der jeweiligen Elektrode zugeführt werden. Im Randbereich der Brennstoffzellen gehen diese Kanäle typischerweise gebündelt in eine externe Betriebsmittelzuführung über und sind gegenüber der Umgebung abgedichtet.

Ein generelles Problem bei Brennstoffzellen ist die sichere Kontaktierung der Elektroden. Die Biploarplatten sind häufig aus Metall gefertigt, wohingegen die Elektroden entweder aus dotierten Keramiken oder Graphiten bestehen. In diesem Fall ist eine stoffliche Verbindung, z.B. durch Verschweißen der Materialien, nicht möglich. Eine sichere Kontaktierung kann daher nur über eine Anpresskraft bzw. einen Anpressdruck erreicht werden.

Eine zusätzliche Schwierigkeit wird durch die Dichtung hervorgerufen, mit der der Stapel nach außen abgedichtet ist. Sie liegt in einer Ebene mit den Kontaktelementen und benötigt ebenso eine ausreichende Anpresskraft. Die Kraft, mit der der Brennstoffzellenstapel zusammengepresst wird, teilt sich folglich auf Kontakte und Dichtung auf, wobei Schrumpfen oder Kriechen des Kontakfi- oder Dichtungsmaterials die Kräfteverhältnisse nachteilig verändern können. Dies kann entweder zu Kontaktproblemen oder zur Undichtigkeit des Stapels führen.

Die Elemente einer Bipolarplatte, mit denen die Elektroden punktförmig, stegförmig oder flächig kontaktiert werden, sind im Folgenden zusammenfassend als Kontaktelemente bezeichnet. Bei der Ausgestaltung der Kontaktelemente werden zwei unterschiedliche Grundprinzipien eingesetzt.

Zum einen können die Kontaktelemente starr ausgeführt sein. Die Kontaktkraft wird durch Vorspannen des gesamten Brennstoffzellenstapels eingestellt. Nachteilig bei einer starren Auslegung der Kontakte ist, dass eine gleichmäßige sichere Kontaktierung nur dann gewährleistet ist, wenn sehr geringe Fertigungstoleranzen für die Dicke von Elektroden und Kontaktelementen bzw. der Bipolarplatten eingehalten werden. Darüber hinaus besteht das Problem, dass sich die Kontaktkräfte durch thermische Ausdehnung bei Erwärmung des Stapels im Betrieb nachteilig verändern können.
Zum anderen ist es möglich, in sich federnde Kontaktelemente einzusetzen. Bei diesem Konzept können sowohl Fertigungstoleranzen wie thermische Ausdehnung durch die Kontaktelemente ausgeglichen werden, was zu einer sicheren Kontaktierung führt. Bei Niedertemperatur-Brennstoffzellen, z.B. der PEMFC (Polymer Electrolyte Membrane Fuel Cell), die bei etwa 100° C betrieben wird, wird das Konzept der federnden Kontaktelementen aufgrund seiner Vorteile häufig eingesetzt, da in diesem Temperaturbereich entsprechende elastische Materialien verfügbar sind. Bei Hochtemperatur-Brennstoffzellen, insbesondere bei der Festoxidbrennstoffzelle (SOFC - Solid Oxide Fuel Cell), die bei Temperaturen oberhalb von 800° C betrieben wird, ist das nicht der Fall. Materialien, die bei diesen Temperaturen eingesetzt werden können, weisen entweder nur eine sehr geringe elastische Verformbarkeit auf oder verlieren sie im Laufe der Zeit, wie z.B. Metalle, die rekristallisieren und dadurch weich werden.

Aus der DE 19645111 C2 ist eine Anordnung für einen SOFC-Stapel angegeben, bei der als Federn wirkende Pufferelemente außen am Stapel im Vorspannungs-Kraftpfad vorgesehen sind. Durch diese Pufferelemente wird über einen weiten Temperaturbereich auch bei starren Kontaktelementen eine nahezu konstante Anpresskraft erreicht.

In der US 2002/0142204 A1 wird zum Vorspannen eines SOFC-Stapels ein stabförmiges Kompressionselement vorgestellt, bei dem durch die Kombination der eingesetzten Materialien ein an den Stapel angepasster thermischer Ausdehnungskoeffizient erzielt wird. Auf diese Weise lässt sich die Kontaktkraft entweder über einen weiten Temperaturbereich konstant halten oder sogar in Abhängigkeit der Temperatur kontrolliert auf vorgegebene Weise verändern.

Beide Lösungen sehen den Einsatz von starren Kontaktelementen vor. Ein fedemdes oder ausgleichendes Element ist jeweils extern angebracht, wodurch weder Fertigungstoleranzen der Bipolarplatten und Elektroden ausgeglichen werden, noch eine sichere Kontaktierung bei nicht elastischen Dichtungen gewährleistet ist.

Weiterhin ist nach dem Stand der Technik eine Bipolarplatte bekannt, die aus einer gewellten Metallplatte besteht. Dadurch werden ohne großen Bearbeitungsaufwand Führungskanäle für die Betriebsmittel bereitgestellt. Gleichzeitig fungiert die Platte als Kontaktelement, wobei durch die Wellenstruktur eine Federung erreicht wird. Kriech- und Rekristallisationsprozesse führen jedoch auch in diesem Fall zu einem Nachlassen der Federwirkung beim Einsatz in Hochtemperatur-Brennstoffzellen.

Aufgabe der Erfindung ist daher, ein Kontaktelement anzugeben, das auch bei hohen Temperaturen dauerhaft elastisch verformbar ist und einen Brennstoffzellenstapel zu beschreiben, bei dem dieses Kontaktelement in vorteilhafter Weise eingesetzt wird.

Diese Aufgabe wird erfindungsgemäß gelöst durch ein Kontaktelement, das mindestens einen mit einem Gas gefüllten, abgeschlossenen Hohlraum aufweist. Die Aufgabe wird weiterhin durch einen Brennstoffzellenstapel gemäß der Merkmale des Anspruchs 11 und 14 gelöst.

Die Grundidee der Erfindung beruht darauf, dass Gaseinschlüsse dem Kontaktelement auch bei hohen Temperaturen dauerhaft Elastizität verleihen. Die Anforderung an das Material der Kontaktelemente, das den Hohlraum umschließt, ist lediglich, dass es verformbar ist. Durch das im Hohlraum eingeschlossene Gas ist das Kontaktelement auch elastisch, wenn das Material selber nur plastisch verformbar ist. Durch die Elastizität der Kontaktelemente ist sicherer Kontakt sowie ein Ausgleich von Fertigungstoleranzen und thermischen Ausdehnungen des Brennstoffzellenstapels gewährleistet.

Vorteilhafter Weise kann als Material für das Kontaktelement Metall eingesetzt werden, z.B. in Form einer Röhre, in die das Gas eingeschlossen ist. Eine Röhre als Kontaktelement kann wie ein Kontaktsteg benutzt werden. Diese Lösung ist zudem wirtschaftlich, da preiswerte Materialien benutzt werden können.

Es ist günstig, inerte Gase oder Edelgase einzusetzen, um einer Korrosion der Wände des Hohlraums vorzubeugen.

Weitergehende Ausgestaltungen der Erfindung sind den Unteransprüchen zu entnehmen.

Die Erfindung wird nachfolgend anhand von Ausführungsbeispielen näher erläutert, wobei auf Zeichnungen Bezug genommen wird. Die Zeichnungen zeigen:
Figur 1 eine Bipolarplatte mit einem Ausführungsbeispiel des erfindungsgemäßen Kontaktelements zwischen zwei Brennstoffzellen eines Brennstoffzellenstapels im Querschnitt,
Figur 2 ein weiteres Ausführungsbeispiel einer Bipolarplatte mit dem erfindungsgemäßen Kontaktelement im Gluerschnitt und
Figur 3 ein Ausführungsbeispiel des erfindungsgemäßen Kontaktelements, wobei das Kontaktelement gleichzeitig als Bipolarplatte ausgebildet ist, im Querschnitt.

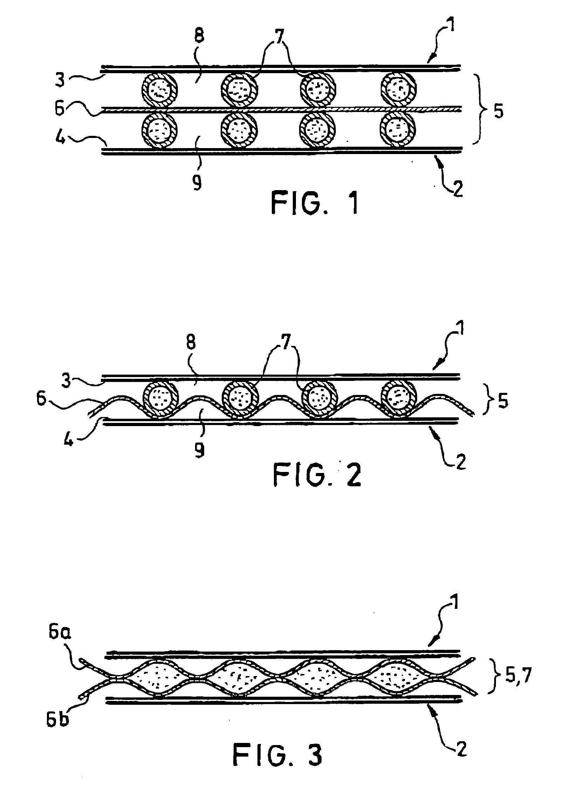

Figur 1 zeigt einen Ausschnitt aus einem Brennstoffzellenstapel. Es ist eine MEA (Membrane Electrode Assembly) einer ersten Brennstoffzelle 1 sowie eine MEA einer zweiten Brennstoffzelle 2 dargestellt. Die MEA der ersten Brennstoffzelle 1 weist eine Kathode 3 auf und die MEA der zweiten Brennstoffzelle 2 eine Anode 4, wobei Kathode 3 und Anode 4 einander zugewandt sind. Zwischen der Kathode 3 und der Anode 4 befindet sich eine Bipolarplatte 5, die aus einer Grundplatte 6 und Kontaktelementen 7 besteht. Zwischen der Kathode 3 und der Grundplatte 6 werden auf diese Weise Kanäle für das Oxidationsmittel 8 gebildet, und analog zwischen der Grundplatte 6 und der Anode 4 Kanäle für den Brennstoff 9.

In diesem Ausführungsbeispiel sind die Kontaktelemente 7 als Röhren ausgebildet. Die Kontaktelemente 7 sind parallel zueinander auf beiden Seiten der Grundplatte 6 angeordnet und mit dieser Grundplatte 6 entweder fest verbunden oder zumindest in ihrer Position fixiert. Diese Einheit aus Grundplatte 6 und Kontaktelementen 7 bildet die Bipolarplatte 5, die einerseits die Kathode 3 und die Anode 4 elektrisch miteinander verbindet und andererseits die Gasräume über der Kathode 3 von den Gasräumen über der Kathode 4 trennt. Gleichzeitig werden durch die Anordnung der röhrenförmigen Kontaktelemente 7 Kanäle für das Oxidationsmittel 8 bzw. Kanäle für den Brennstoff 9 zur Verteilung dieser Betriebsmittel gebildet. Anforderungen an das Material für die Grundplatte 6 und für die Kontaktelemente 7 ist elektrische Leitfähigkeit und für die Kontaktelemente 7 zusätzlich Verformbarkeit. Aus diesen Anforderungen ergibt sich, dass Metall und insbesondere der auch bei hohen Temperaturen chemisch inerte ferritische Stahl ein geeigneter und zudem preiswerter Werkstoff ist.

Die Kontaktelemente 7 sind an beiden Enden gasdicht verschlossen, was im Fall von Metallröhren durch Verquetschen und/oder Verschweißen oder einem eingesetzten und abgedichteten Stopfen geschehen kann. Im einfachsten Fall besteht die Gasfüllung aus Luft bei Atmosphärendruck. Zum Schutz der inneren Oberflächen kann vorteilhafterweise aber auch ein Edel- bzw. Inertgas oder eine entsprechende, als Schutzgas bekannte Mischung eingesetzt werden. Weiterhin ist möglich, den gewünschten Innendruck bei Betriebstemperatur dadurch anzupassen, dass die Gasfüllung bei der Befüllung bei vor dem Verschließen der Röhren auf einen definierten Über- oder Unterdruck gebracht wird.

In der gezeigten Anordnung verlaufen die Kanäle für das Oxidationsmittel 8 und die Kanäle für den Brennstoff 9 parallel zueinander (Gleich- oder Gegenstromtechnik). Ebenso ist möglich, die Kontaktelemente und damit die Gasströme auf Anoden- und Kathodenseite um 90° verdreht zueinander verlaufen zu lassen (Kreuzstromtechnik).

Figur 2 zeigt ebenfalls einen Ausschnitt aus einem Brennstoffzellenstapel. Im Unterschied zum Ausführungsbeispiel in Figur 1 wird die Bipolarplatte 5 in diesem Beispiel aus einer gewellten Grundplatte 6 sowie Kontaktelementen 7, die nur auf einer Seite der Grundplatte 6 angeordnet sind, gebildet. Die Kontaktelemente 7 sind auch hier als gasdicht verschlossene Röhren ausgebildet, wobei zur Materialauswahl und zum möglichen Herstellungsweg das zu Figur 1 Angemerkte gilt. Die gezeigte Anordnung ermöglicht eine sehr kompakte Bauweise der Bipolarplatte 5. Wiederum sind durch die Grundplatte 6 die Gasräume über der Kathode 3 bzw. der Anode 4 voneinander getrennt und gleichzeitig Kathode 3 und Anode 4 elektrisch miteinander verbunden. Brennstoffzellen, vor allen Dingen Hochtemperatur-Brennstoffzetten wie die SOFC, werden häufig mit einem Überschuss an Oxidationsmittel betrieben. Dieser Tatsache kann im gezeigten Ausführungsbeispiel insofern Rechnung getragen werden, dass die Querschnitte der Kanäle für das Oxidationsmittel 8 durch geeignete Formgebung der Grundplatte 6 größer sind als die entsprechenden Kanäle für den Brennstoff 9.

In Figur 3 ist eine alternative Ausgestaltung des Kontaktelements 7 dargestellt. Wiederum zeigt die Figur einen Ausschnitt aus einem Brennstoffzellenstapel mit der MEA einer ersten Brennstoffzelle 1 und der MEA einer zweiten Brennstoffzelle 2. Das Kontaktelement 7 und die Bipolarplatte 5 sind in diesem Fall in einer Einheit integriert. Dazu werden zwei gewellte Grundplatte 6a und 6b spiegelbildlich zueinander aufeinandergelegt und an ihrem Umfang gasdicht miteinander verbunden. Auf diese Weise entsteht eine Struktur mit in ihrem Querschnitt mandelförmigen parallelen Längsrippen. Zur Stabilisierung dieser Struktur gegenüber dem inneren Gasdruck können die Grundplatten 6a und 6b zusätzlich an den Berührungspunkten zwischen den einzelnen Rippen miteinander verbunden werden, beispielsweise durch Schweißpunkte oder Schweißnähte. Die Verbindung kann entweder so ausgeführt werden, dass nach wie vor ein Gasaustausch zwischen den einzelnen Rippen möglich ist. Dadurch ist sichergestellt, dass in allen Rippen der gleiche Gasdruck herrscht und sie somit die gleiche Federwirkung aufweisen. Alternativ kann die Verbindung so ausgeführt sein, dass die einzelnen Rippen voneinander gasdicht getrennt sind. Diese Ausführungsform hat den Vorteil, dass bei Undichtigkeit einer Rippe nicht die gesamte Bipolarplatte 5 ihre Federwirkung verliert und kollabiert. Beim Einsatz von Metall für die Grundplatten 6a und 6b bietet sich zur ihrer Verbindung und zum Abdichten insbesondere Laserverschweißen an.

Auch für diese integrierte Ausführungsform der Bipolarplatte 5 und der Kontaktelemente 7 gelten bezüglich der Materialauswahl und der Gasfüllung die im Zusammenhang mit der Figur 1 genannten Kriterien.

### Bezugszeichenliste

- 1: MEA (Membrane Electrode Assembly) einer ersten Brennstoffzelle
- 2: MEA einer zweiten Brennstoffzelle
- 3: Kathode
- 4: Anode
- 5: Bipolarplatte
- 6, 6a, 6b: Grundplatte
- 7: Kontaktelement
- 8: Kanal für Oxidationsmittel
- 9: Kanal für Brennstoff

## Patentansprüche

1. Kontaktelement (7) für einen Brennstoffzellenstapel zur Verbindung von Elektroden (3,4) zweier benachbarter Brennstoffzellen, **dadurch gekennzeichnet, dass**
das Kontaktelement (7) mindestens einen mit einem Gas gefüllten, abgeschlossenen Hohlraum aufweist.

2. Kontaktelement (7) nach Anspruch 1, **dadurch gekennzeichnet, dass**
das Kontaktelement (7) aus einem verformbaren Material gebildet ist und
durch das Gas in dem abgeschlossenen Hohlraum elastische Eigenschaften aufweist.

3. Kontaktelement (7) nach einem der Ansprüche 1 oder 2, **dadurch gekennzeichnet, dass**
das Kontaktelement (7) aus Metall ist.

4. Kontaktelement (7) nach einem der Ansprüche 1 bis 3, **dadurch gekennzeichnet, dass**
das Gas ein Edelgas oder ein Inertgas ist.

5. Kontaktelement (7) nach einem der Ansprüche 1 bis 4, **dadurch gekennzeichnet, dass**
der mindestens eine Hohlraum durch ein Rohr gebildet ist.

6. Kontaktelement (7) nach einem der Ansprüche 1 bis 4, **dadurch gekennzeichnet, dass**
mehrere Hohlräume durch zwei zueinander spiegelbildlich angeordnete gewellte Grundplatten (6a, 6b) gebildet sind, wobei die Grundplatten (6a, 6b) in einem Außenbereich derart miteinander verbunden sind, dass die entstehenden Hohlräume gasdicht zur Umgebung abgedichtet sind.

7. Kontaktelement (7) nach Anspruch 6, **dadurch gekennzeichnet, dass** die Grundplatten (6a, 6b) aus ferritischem Stahl sind.

8. Kontaktelement (7) nach einem der Ansprüche 6 oder 7, **dadurch gekennzeichnet, dass**
die Grundplatten (6a, 6b) auf ihren Flächen parallel verlaufende Verbindungsnähte aufweisen.

9. Kontaktelement (7) nach einem der Ansprüche 6 bis 8, **dadurch gekennzeichnet, dass**
die durch die parallel verlaufenden Verbindungsnähte voneinander abgetrennten Hohlräume gasdicht zueinander abgedichtet sind.

10. Kontaktelement (7) nach einem der Ansprüche 6 bis 9, **dadurch gekennzeichnet, dass**
die Verbindung zwischen den Grundplatten (6a, 6b) durch Laserschweißung erfolgt.

11. Brennstoffzellenstapel mit mindestens zwei planaren Brennstoffzellen, wobei jeweils zwischen zwei Brennstoffzellen eine Bipolarplatte (5) vorgesehen ist, **dadurch gekennzeichnet, dass**
jede Bipolarplatte (5) eine Grundplatte (6) und röhrenförmige Kontaktelemente (7) gemäß Anspruch 5 aufweist, wobei mehrere, parallel verlaufende röhrenförmige Kontaktelemente (7) auf mindestens einer Seite jeder Bipolarplatte (5) angeordnet sind, und die Anode (4) einer Brennstoffzelle jeweils mit der Kathode (3) der ihr gegenüberliegenden Brennstoffzelle über die Kontaktelemente (7) elektrisch verbunden ist.

12. Brennstoffzellenstapel nach Anspruch 11, **dadurch gekennzeichnet, dass** die Grundplatte (6) gewellt ist.

13. Brennstoffzellenstapel nach einem der Ansprüche 11 oder 12, **dadurch gekennzeichnet, dass**
die Grundplatte (6) aus ferritischem Stahl sind.

14. Brennstoffzellenstapel mit mindestens zwei planaren Brennstoffzellen, **dadurch gekennzeichnet, dass**
zwischen jeweils zwei Brennstoffzellen ein Kontaktelement(7) nach einem der Ansprüche 6 bis 10 angeordnet ist, wobei die Anode (4) einer Brennstoffzelle jeweils mit der Kathode (3) der ihr gegenüberliegenden Brennstoffzelle über das Kontaktelement (7) elektrisch verbunden ist.
